# FASCICULE DE BREVET EUROPEEN

(11) **EP 3 069 963 B1**
(45) Date de publication et mention de la délivrance du brevet: **07.02.2018**
(21) Numéro de dépôt: 15198627.0
(22) Date de dépôt: 09.12.2015
(51) Int. Cl.: B62D 25/04

(54) **CAISSE DE VEHICULE AVEC RAIDISSEUR LATERAL ARRIERE**
FAHRZEUGKAROSSERIE MIT SEITLICHER HECKVERSTEIFUNG
VEHICLE BODY WITH REAR LATERAL STIFFENER

(30) Priorité: 05.01.2015 FR 1550008
(43) Date de publication de la demande: 21.09.2016
(73) Titulaire: PSA Automobiles SA, 78300 Poissy (FR)
(72) Inventeur: ROBERT, Cedric, 70400 HERICOURT (FR); ARNAUD, Laurent, 70110 SENARGENT MIGNAFANS (FR)
(74) Mandataire: Fosse, Danièle

(56) Documents cités:
- WO-A1-2008/025906
- WO-A1-2014/041292
- DE-A1-102007 052 620
- JP-A- 2006 062 565
- US-A1- 2014 015 283

## Description

L'invention a trait au domaine des véhicules automobiles. Plus particulièrement l'invention a trait au domaine de la réalisation d'une caisse de véhicule, plus particulièrement encore à la rigidité de la caisse.

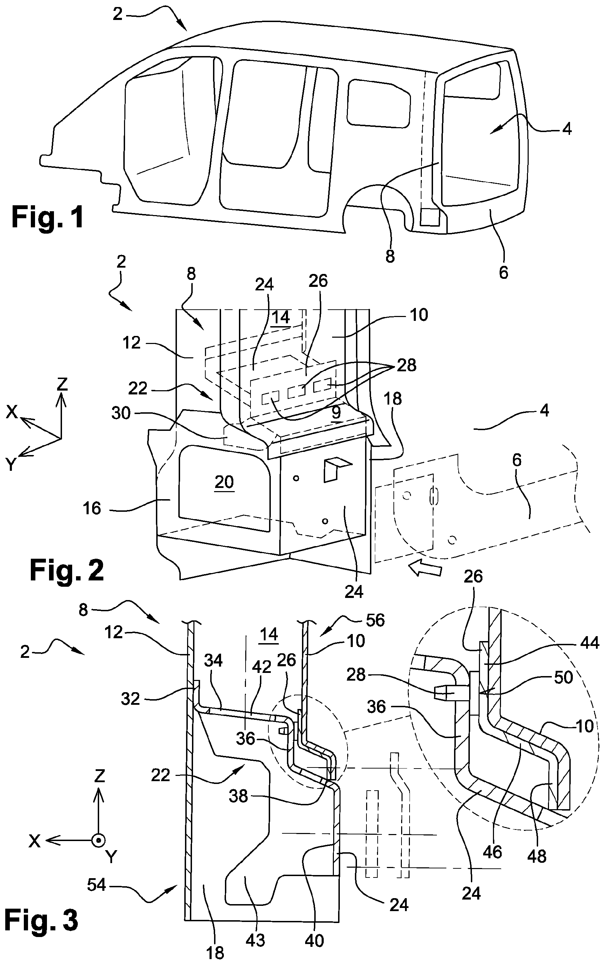

La figure 1 est une vue d'une caisse 2 de véhicule comprenant une entrée arrière 4 destinée à recevoir un volet de fermeture. L'entrée arrière 4 est délimitée par un panneau inférieur 6 formant le seuil de l'entrée arrière, ainsi qu'une gouttière 8 s'étendant sur le pourtour latéral et supérieur. L'entrée arrière d'un véhicule utilitaire ou de particulier peut être de grande section. Cette grande section est intéressante pour faciliter le passage de pièces de volume important dans le véhicule, elle affaiblit cependant la rigidité de la caisse du véhicule, en particulier sur la portion de la caisse délimitant l'entrée.

Le document de brevet JP 2006-062565 A divulgue une caisse de véhicule comprenant une entrée arrière destinée à recevoir un volet arrière. La caisse comprend une gouttière délimitant l'entrée arrière, et, en avant de la gouttière, une doublure de gouttière fixée à ladite gouttière ; un corps creux est réalisé par cet assemblage. La caisse comprend, en outre, un raidisseur situé dans le corps creux et fixé à la doublure. La doublure comprend deux éléments, le premier élément s'étendant transversalement, le deuxième élément s'étendant verticalement et comprenant une portion coudée assemblée au premier élément. Le raidisseur est un bossage réalisé par emboutissage de la doublure de gouttière. La solution de cet enseignement est intéressante en ce que le raidisseur rigidifie le corps creux de manière simple sans sensiblement alourdir la caisse. L'augmentation de rigidité est cependant limitée. De plus, elle est limitée à une rigidification localisée de la gouttière arrière.

Le document de brevet WO 2008/025906 A1 divulgue une caisse de véhicule comprenant une entrée arrière destinée à recevoir un volet arrière en deux battants latéraux. La caisse comprend une gouttière délimitant l'entrée arrière, des charnières étant destinées à être fixées sur la gouttière pour monter les battants du volet à la caisse du véhicule. La caisse comprend une doublure de gouttière en avant de la gouttière et fixée à ladite gouttière en formant un corps creux. La caisse comprend, en outre, un renfort fixé à la gouttière en arrière de la paroi destinée à recevoir les charnières. En particulier, le renfort peut être fixé, en outre, sur une feuillure s'étendant verticalement de la doublure de gouttière. Plus particulièrement encore, l'entrée arrière peut être réalisée dans un corps de caisse ajouté à l'arrière d'une caisse existante en vue de réaliser une version « longue » d'un véhicule existant, la caisse comprenant alors un raidisseur d'extension situé longitudinalement à mi-distance du corps d'extension, le renfort pouvant être fixé à une feuillure du raidisseur. La solution de cet enseignement est intéressante en ce que le renfort de charnière améliore la tenue de la gouttière pour le montage des battants de volet tout en améliorant, sans ajout de pièce supplémentaire, la rigidité de la caisse par la fixation supplémentaire du renfort au raidisseur de l'extension de caisse ou à la doublure de gouttière. Cette solution est cependant potentiellement onéreuse en ce qu'elle peut engendrer une modification de l'architecture de la caisse par exemple pour l'accessibilité en vue du montage du renfort.

L'invention a pour objectif de proposer une solution palliant les inconvénients de l'état de l'art, en particulier de l'état de l'art susmentionné. Plus particulièrement, l'invention a pour objectif de proposer une solution pour rigidifier la caisse d'un véhicule automobile au niveau de l'entrée arrière qui soit économique.

L'invention a pour objet une caisse de véhicule automobile, avec une entrée arrière destinée à être fermée par un volet et délimitée par une gouttière, ladite caisse comprenant : un élément avant formant une doublure de la gouttière ; un élément arrière formant ladite gouttière, ledit élément étant fixé à l'élément avant en vue de former un corps creux s'étendant généralement verticalement ; un raidisseur situé à l'intérieur du corps creux ; remarquable en ce que le raidisseur comprend : une première cloison fixée à l'élément avant et s'étendant jusqu'à l'élément arrière ; une deuxième cloison fixée à l'élément arrière ; et des moyens de fixation rapide entre les première et deuxième cloisons de manière à permettre la fixation desdites cloisons lors de l'assemblage des éléments avant et arrière. Les faces latérales du corps creux peuvent être réalisées par des portions latérales intérieure et extérieure des éléments avant et arrière.

Selon un mode avantageux de l'invention, la première cloison comprend une portion s'étendant majoritairement horizontalement et au moins une portion s'étendant majoritairement verticalement. « Majoritairement vertical ou horizontal » signifie que l'inclinaison moyenne est inférieure à 45° par rapport à l'horizontale ou la verticale, respectivement.

Selon un mode avantageux de l'invention, la première et/ou la deuxième cloison s'étendent essentiellement longitudinalement.

Selon un mode avantageux de l'invention, la première cloison comprend une feuillure transversale de fixation à l'élément avant.

Selon un mode avantageux de l'invention, la ou les portions verticales sont généralement perpendiculaires à l'axe longitudinal du véhicule.

Selon un mode avantageux de l'invention, la portion majoritairement horizontale de la première cloison occupe toute la section du corps creux et comprend un orifice, ledit orifice présentant préférentiellement une surface correspondant à plus de 50% de ladite section du corps creux.

Selon un mode avantageux de l'invention, les moyens de fixation rapide sont situés sur la ou une des portions majoritairement verticale de la première cloison.

Selon un mode avantageux de l'invention, les portions majoritairement verticales de la première cloison comprennent une première portion adjacente à la portion majoritairement horizontale, et une deuxième portion située sous la première, la première cloison comprenant en outre une portion inclinée entre les première et deuxième portions majoritairement verticales.

Selon un mode avantageux de l'invention, la deuxième cloison comprend une première portion majoritairement verticale, une deuxième portion majoritairement verticale située sous ladite première portion, et une portion inclinée ou majoritairement horizontale entre les première et deuxième portions majoritairement verticales, ladite première portion s'étendant le long de la première portion majoritairement verticale de la première cloison.

Selon un mode avantageux de l'invention, la deuxième cloison comprend au moins une portion latérale, préférentiellement au niveau de la portion inclinée ou majoritairement horizontale, ladite ou lesdites portions latérales étant fixées à l'élément arrière.

Selon un mode avantageux de l'invention, les moyens de fixation rapide des première et deuxième cloisons du raidisseur sont des moyens par engagement dans une direction horizontale, préférentiellement par clipsage.

Selon un mode avantageux de l'invention, les moyens de fixation rapide comprennent des clips insérés dans des orifices de la première cloison, lesdits clips comprenant une surface autocollante recevant la deuxième cloison.

L'invention a également pour objet un procédé d'assemblage d'une caisse de véhicule automobile avec une entrée arrière destinée à être fermée par un volet arrière ; remarquable en ce que la caisse est conforme à l'invention, le procédé d'assemblage comprenant les étapes suivantes :
a) fixation de la première cloison à l'élément avant de manière à former un premier ensemble ;
b) fixation de la deuxième cloison à l'élément arrière de manière à former un deuxième ensemble ;
c) Assemblage des premier et deuxième ensembles notamment par les moyens de fixation rapide.

L'invention a également pour objet un véhicule automobile comprenant : une caisse avec une entrée arrière délimitée par une gouttière ; un panneau arrière délimitant le bord inférieur de l'entrée arrière ; un volet ou une ou des portes pour fermer l'entrée arrière ; remarquable en ce que la caisse est conforme à l'invention, le panneau arrière comportant une portion coudée fixée à la deuxième portion majoritairement verticale de la première cloison, préférentiellement par vis. Le véhicule automobile est un véhicule de particulier ou un véhicule utilitaire.

Selon un mode avantageux, la portion coudée du panneau arrière du véhicule comprend une feuillure soudée à une feuillure correspondante de la gouttière.

Les mesures de l'invention sont intéressantes en ce que la caisse est rigidifiée au niveau de l'entrée arrière de manière économique. En effet, la caisse est réalisée par assemblage grâce à des moyens de fixation rapide d'ensembles pré-montés comprenant les éléments de renfort nécessaires à la rigidification de la caisse.

D'autres caractéristiques et avantages de la présente invention seront mieux compris à l'aide de la description et des dessins parmi lesquels :
- La figure 1 est une vue en perspective d'une caisse de véhicule automobile conforme à l'invention avec une entrée arrière ;
- La figure 2 est une vue en perspective de la caisse de la figure 1 au niveau d'une gouttière délimitant l'entrée arrière ;
- La figure 3 est une vue en coupe longitudinale de la caisse du véhicule au niveau de la gouttière représentée à la figure 2 ;

La figure 1 est une vue en perspective d'une caisse 2 de véhicule automobile conforme à l'invention. Cette figure a été présentée en relation avec la discussion de l'état de l'art.

La figure 2 est une vue en perspective de la caisse 2 de véhicule au niveau du bas d'une gouttière 8 délimitant l'entrée arrière 4 du véhicule. Le bas de la gouttière 8 d'entrée de porte est couramment appelé le « pied arrière » d'entrée de porte. Le pied arrière comprend plus précisément le bas de la gouttière 8 s'étendant verticalement de long du bord latéral de l'entrée de porte, il comprend également la portion latérale coudée, reliée à la gouttière, d'un panneau arrière 6 du véhicule s'étendant horizontalement sous l'entrée de porte 4 et vissé sur la caisse 2. On peut observer que la gouttière forme une « marche » 9 dans sa partie inférieure. La gouttière 8 comprend un élément arrière 10 et un élément avant 12 formant une doublure de la gouttière. Un trièdre de référencement X, Y, Z est illustré sur l'image, la direction vers « l'avant » s'entend selon le véhicule c'est-à-dire dans la direction X. L'élément avant 12 est fixé à l'élément arrière 10 et forme avec celui-ci un corps creux 14 s'étendant généralement verticalement. Les faces latérales 16 et 18 du corps creux sont en l'occurrence réalisées par des portions latérales intérieure et extérieure formées par les éléments avant et arrière 10 et 12 ; la portion latérale intérieure 18 est formée par l'élément avant 12, la portion latérale extérieure 16 est formée par l'élément arrière 10. On peut observer que la portion latérale extérieure 16 comprend un orifice 20 de section sensiblement importante. Cet orifice 20 est destiné à l'expulsion de l'air de l'intérieur du véhicule vers l'extérieur lors de la fermeture du volet arrière. La caisse 2 comprend, en outre, un raidisseur 22 situé à l'intérieur du corps creux 14. Le raidisseur 22 comprend une première cloison 24 fixée à l'élément avant 12 et s'étendant jusqu'à l'élément arrière 10 ainsi qu'une deuxième cloison 26 fixée à l'élément arrière 10. Le raidisseur 22 comprend, en outre, des moyens de fixation rapide 28 entre les première et deuxième cloisons 24 et 26 de manière à permettre la fixation desdites cloisons 24 et 26 lors de l'assemblage des éléments avant et arrière 12 et 10. On peut voir les première et deuxième cloisons 24 et 26 du raidisseur 22 représentées en pointillé, en avant, selon la direction X, par rapport à la gouttière 10. La deuxième cloison 26 comprend une portion latérale 30, au niveau de la forme de « marche » 9, cette portion latérale étant fixée à l'élément arrière 10 via la face latérale extérieure 16. Cette mesure est intéressante en ce que cette portion rigidifie en X la forme de « marche » formée dans la paroi arrière 10 de la gouttière.

La figure 3 est une vue en coupe longitudinale de la caisse 2 du véhicule automobile au niveau du pied arrière présenté en relation avec la figure 2. On peut voir les éléments avant et arrière 12 et 10 de la gouttière 8 ainsi que le raidisseur 22 situé entre les éléments avant et arrière 12 et 10, la première cloison 24 s'étendant longitudinalement entre les éléments avant et arrière 12 et 10. La première cloison 24, de la gauche vers la droite comprend une feuillure transversale 32 de fixation à l'élément avant 12, puis une première portion s'étendant majoritairement horizontalement 34, puis une première portion majoritairement verticale 36, puis une portion inclinée vers le bas 38, puis enfin une deuxième portion 40 s'étendant majoritairement verticalement. Des deux portions verticales 36 et 40 de la première cloison 24, la deuxième portion 40 est située sous la première 36 selon l'axe Z. Par « majoritairement vertical ou horizontal », on entend que l'inclinaison moyenne est inférieure à 45° par rapport à l'horizontale ou la verticale, respectivement. Les portions verticales 36 et 40 sont généralement perpendiculaires à l'axe longitudinal X du véhicule. La première portion majoritairement horizontale 34 de la première cloison 24 occupe toute la section du corps creux 14 et comprend un orifice 42 qui présente une surface correspondant à plus de 50% de la section du corps creux. On peut voir que la première cloison comprend une portion latérale 43 fixée à la l'élément avant 12 via la face latérale intérieure 18. Cette mesure est intéressante pour augmenter la rigidité en torsion selon Y de la première cloison 24. La deuxième cloison 26 comprend, de la gauche vers la droite sur l'image (voir la zone agrandie), une première portion 44 majoritairement verticale qui s'étend le long de la première portion 36 majoritairement verticale de la première cloison 24 et qui y est fixée par les moyens de fixation rapide 28, puis une portion inclinée 46 ou majoritairement horizontale, puis une deuxième portion majoritairement verticale 48. La deuxième cloison 26 est par ailleurs fixée à l'élément arrière 10 par soudure. Des deux portions verticales 44 et 48 de la deuxième cloison 26, la deuxième portion 48 est située sous la première selon la direction Z. Sur la zone agrandie de l'image représentée à droite de l'image principale, on peut voir que les moyens de fixation rapides 28 sont des moyens par engagement dans une direction horizontale, ils sont en l'occurrence des clips, au nombre de trois, insérés dans des orifices de fixation de la première cloison 28. Les clips comprennent une surface autocollante 50 recevant la deuxième cloison 26.

Le procédé d'assemblage de la caisse 2 de véhicule automobile avec une entrée arrière destinée à être fermée par un volet arrière conforme à l'invention, comprend les étapes suivantes : a) fixation de la première cloison 24 à l'élément avant 12 de manière à former un premier ensemble 54 ; b) fixation de la deuxième cloison 26 à l'élément arrière 10 de manière à former un deuxième ensemble 56 ; c) assemblage des premier et deuxième ensembles 54 et 56 notamment par les moyens de fixation rapide 28.

## Revendications

1. Caisse (2) de véhicule automobile, avec une entrée arrière (4) destinée à être fermée par un volet et délimitée par une gouttière (8), ladite caisse (2) comprenant :
- un élément avant (12) formant une doublure de la gouttière ;
- un élément arrière (10) formant ladite gouttière, ledit élément étant fixé à l'élément avant (12) en vue de former un corps creux (14) s'étendant généralement verticalement ;
- un raidisseur (22) situé à l'intérieur du corps creux (14) ;
**caractérisée en ce que** le raidisseur (22) comprend :
- une première cloison (24) fixée à l'élément avant (12) et s'étendant jusqu'à l'élément arrière (10) ;
- une deuxième cloison (26) fixée à l'élément arrière (10) ; et
- des moyens de fixation rapide (28) entre les premières (24) et deuxième (26) cloisons de manière à permettre la fixation desdites cloisons lors de l'assemblage des éléments avant (12) et arrière (10).

2. Caisse (2) de véhicule automobile selon la revendication 1, **caractérisé en ce que** la première cloison (24) comprend une portion (34) s'étendant majoritairement horizontalement et au moins une portion (36) s'étendant majoritairement verticalement.

3. Caisse (2) de véhicule automobile selon la revendication 2, **caractérisée en ce que** la portion majoritairement horizontale (34) de la première cloison (24) occupe toute la section du corps creux (14) et comprend un orifice (34), ledit orifice présentant préférentiellement une surface correspondant à plus de 50% de ladite section du corps creux (14).

4. Caisse (2) de véhicule automobile selon l'une des revendications 2 et 3, **caractérisée en ce que** les moyens de fixation rapide (28) sont situés sur la ou une des portions majoritairement verticale (36) de la première cloison (24).

5. Caisse (2) de véhicule automobile selon l'une des revendications 2 à 4, **caractérisé en ce que** les portions majoritairement verticales (36 ; 40) de la première cloison (24) comprennent une première portion (36) adjacente à la portion majoritairement horizontale (34), et une deuxième portion (40) située sous la première, la première cloison (24) comprenant en outre une portion inclinée (38) entre les première (36) et deuxième (40) portions majoritairement verticales.

6. Caisse (2) de véhicule automobile selon la revendication 5, **caractérisée en ce que** la deuxième cloison (26) comprend une première portion (44) majoritairement verticale, une deuxième portion (48) majoritairement verticale située sous ladite première portion, et une portion inclinée (46) ou majoritairement horizontale entre les première et deuxième portions majoritairement verticales, ladite première portion (44) s'étendant le long de la première portion (36) majoritairement verticale de la première cloison (24).

7. Caisse (2) de véhicule automobile selon la revendication 6, **caractérisée en ce que** la deuxième cloison (26) comprend au moins une portion latérale (30), préférentiellement au niveau de la portion (46) inclinée ou majoritairement horizontale, ladite ou lesdites portions latérales étant fixées à l'élément arrière (10).

8. Caisse (2) de véhicule automobile selon l'une des revendications 1 à 7, **caractérisée en ce que** les moyens de fixation rapide (28) des premières (24) et deuxième (26) cloisons du raidisseur (22) sont des moyens par engagement dans une direction horizontale, préférentiellement par clipsage.

9. Caisse (2) de véhicule automobile selon l'une des revendications 1 à 8, **caractérisée en ce que** les moyens de fixation comprennent des clips (28) insérés dans des orifices de la première cloison (24), lesdits clips comprenant une surface autocollante (50) recevant la deuxième cloison (26).

10. Procédé d'assemblage d'une caisse (2) de véhicule automobile avec une entrée arrière (4) destinée à être fermée par un volet arrière ;
**caractérisé en ce que** la caisse (2) est conforme à l'une des revendications 1 à 9, le procédé d'assemblage comprenant les étapes suivantes ;
a) fixation de la première cloison (24) à l'élément avant (12) de manière à former un premier ensemble (54) ;
b) fixation de la deuxième cloison (26) à l'élément arrière (10) de manière à former un deuxième ensemble (56) ;
c) Assemblage des premiers (54) et deuxième (56) ensembles notamment par les moyens de fixation rapide (28).

## Patentansprüche

1. Karosserie (2) eines Kraftfahrzeugs, mit einem hinteren Einstieg (4), der dazu bestimmt ist, durch eine Klappe geschlossen zu werden, und durch eine Regenrinne (8) eingegrenzt wird, wobei die besagte Karosserie (2) umfasst:
- ein vorderes Element (12), das eine Auskleidung der Regenrinne bildet;
- ein hinteres Element (10), das die besagte Regenrinne bildet, wobei das besagte Element im Hinblick darauf am vorderen Element (12) befestigt ist, um einen Hohlkörper (14) zu bilden, der sich im Allgemeinen vertikal erstreckt;
- eine Versteifung (22), die sich im Inneren des Hohlkörpers (14) befindet; **dadurch gekennzeichnet, dass** die Versteifung (22) umfasst:
- eine erste Wand (24), die am vorderen Element (12) befestigt ist, und sich bis zum hinteren Element (10) erstreckt;
- eine zweite Wand (26), die am hinteren Element (10) befestigt ist; und
- Schnellbefestigungsmittel (28) zwischen der ersten (24) und der zweiten (26) Wand, um die Befestigung der besagten Wände beim Zusammensetzen des vorderen (12) und hinteren Elements (10) zu ermöglichen.

2. Karosserie (2) eines Kraftfahrzeugs nach Anspruch 1, **dadurch gekennzeichnet, dass** die erste Wand (24) einen Abschnitt (34) umfasst, der sich mehrheitlich horizontal erstreckt und zumindest einen Abschnitt (36), der sich mehrheitlich vertikal erstreckt.

3. Karosserie (2) eines Kraftfahrzeugs nach Anspruch 2, **dadurch gekennzeichnet, dass** der mehrheitlich horizontale Abschnitt (34) der ersten Wand (24) den gesamten Querschnitt des Hohlkörpers (14) einnimmt, und eine Öffnung (34) umfasst, wobei die besagte Öffnung vorzugsweise eine Oberfläche aufweist, die zu mehr als 50% dem besagten Querschnitt des Hohlkörpers (14) entspricht.

4. Karosserie (2) eines Kraftfahrzeugs nach einem der Ansprüche 2 und 3, **dadurch gekennzeichnet, dass** sich die Schnellbefestigungsmittel (28) auf dem oder einem der mehrheitlich vertikalen Abschnitte (36) der ersten Wand (24) befinden.

5. Karosserie (2) eines Kraftfahrzeugs nach einem der Ansprüche 2 bis 4, **dadurch gekennzeichnet, dass** die mehrheitlich vertikalen Abschnitte (36; 40) der ersten Wand (24) einen ersten Abschnitt (36) angrenzend an den mehrheitlich horizontalen Abschnitt (34) und einen zweiten Abschnitt (40) umfassen, der sich unter dem ersten befindet, wobei die erste Wand (24) weiter einen geneigten Abschnitt (38) zwischen den ersten (36) und zweiten mehrheitlich vertikalen (40) Abschnitten umfasst.

6. Karosserie (2) eines Kraftfahrzeugs nach Anspruch 5, **dadurch gekennzeichnet, dass** die zweite Wand (26) einen ersten mehrheitlich vertikalen Abschnitt (44) umfasst, einen zweiten mehrheitlich vertikalen Abschnitt (48), der sich unter dem besagten ersten Abschnitt befindet, und einen geneigten (46) oder mehrheitlich horizontalen Abschnitt zwischen den ersten und zweiten mehrheitlich vertikalen Abschnitten, wobei sich der besagte erste Abschnitt (44) entlang des ersten mehrheitlich vertikalen Abschnitts (36) der ersten Wand (24) erstreckt.

7. Karosserie (2) eines Kraftfahrzeugs nach Anspruch 6, **dadurch gekennzeichnet, dass** die zweite Wand (26) zumindest einen seitlichen Abschnitt (30), vorzugsweise im Bereich des geneigten oder mehrheitlich horizontalen Abschnitts (46) umfasst, wobei der besagte oder die besagten seitlichen Abschnitte am hinteren Element (10) befestigt sind.

8. Karosserie (2) eines Kraftfahrzeugs nach einem der Ansprüche 1 bis 7, **dadurch gekennzeichnet, dass** die Schnellbefestigungsmittel (28) der ersten (24) und zweiten (26) Wand der Versteifung (22) Mittel durch Einführen in eine horizontale Richtung, vorzugsweise durch Klipsen sind.

9. Karosserie (2) eines Kraftfahrzeugs nach einem der Ansprüche 1 bis 8, **dadurch gekennzeichnet, dass** die Befestigungsmittel Klipse (28) umfassen, die in Öffnungen der ersten Wand (24) eingeführt werden, wobei die besagten Klipse eine selbstklebende Oberfläche (50) umfassen, die die zweite Wand (26) aufnimmt.

10. Verfahren zur Montage einer Karosserie (2) eines Kraftfahrzeugs mit einem hinteren Einstieg (4), dazu bestimmt, durch eine hintere Klappe geschlossen zu werden;
**dadurch gekennzeichnet, dass** die Karosserie (2) einem der Ansprüche 1 bis 9 entspricht, wobei das Verfahren zur Montage die folgenden Schritte umfasst:
a) Befestigung der ersten Wand (24) an dem vorderen Element (12), um eine erste Einheit (54) zu bilden;
b) Befestigung der zweiten Wand (26) an dem hinteren Element (10), um eine zweite Einheit (56) zu bilden;
c) Montage der ersten (54) und zweiten (56) Einheit zusammen, vor allem durch die Schnellbefestigungsmittel (28).

## Claims

1. Motor-vehicle bodywork (2), with a rear entrance (4) intended to be closed by a hatch and delimited by a channel (8), said bodywork (2) comprising:
- a front element (12) forming a lining for the channel;
- a rear element (10) forming said channel, said element being fixed to the front element (12) with a view to forming a hollow body (14) extending generally vertically;
- a stiffener (22) situated inside the hollow body (14);
**characterised in that** the stiffener (22) comprises:
- a first partition (24) fixed to the front element (12) and extending as far as the rear element (10);
- a second partition (26) fixed to the rear element (10); and
- means (28) for rapid fixing between the first (24) and second (26) partitions so as to allow fixing of said partitions when said front (12) and rear (10) elements are assembled.

2. Motor-vehicle bodywork (2) according to claim 1, **characterised in that** the first partition (24) comprises a portion (34) extending mainly horizontally and at least one portion (36) extending mainly vertically.

3. Motor-vehicle bodywork (2) according to claim 2, **characterised in that** the mainly horizontal portion (34) of the first partition (24) occupies the entire cross section of the hollow body (14) and comprises an orifice (34), said orifice preferentially having a surface corresponding to more than more 50% of said cross section of the hollow body (14).

4. Motor-vehicle bodywork (2) according to any of claim 2 and 3, **characterised in that** the rapid fixing means (28) are situated on the or one of the mainly vertical portions (36) of the first partition (24).

5. Motor-vehicle bodywork (2) according to any of claims 2 to 4, **characterised in that** the mainly vertical portions (36; 40) of the first partition (24) comprise a first portion (36) adjacent to the mainly horizontal portion (34), and a second portion (40) situated under the first, the first partition (24) further comprising an inclined portion (38) between the first (36) and second (40) mainly vertical portions.

6. Motor-vehicle bodywork (2) according to claim 5, **characterised in that** the second partition (26) comprises a first mainly vertical portion (44), a second mainly vertical portion (48) situated under said first portion, and an inclined (46) or mainly horizontal portion between the first and second mainly vertical portions, said first portion (44) extending along the first mainly vertical portion (36) of the first partition (24).

7. Motor-vehicle bodywork (2) according to claim 6, **characterised in that** the second partition (26) comprises at least one lateral portion (30), preferentially at the inclined or mainly horizontal portion (46), said lateral portion or portions being fixed to the rear element (10).

8. Motor-vehicle bodywork (2) according to any of claims 1 to 7, **characterised in that** the rapid fixing means (28) for the first (24) and second (26) partitions of the stiffener (22) are means by engagement in a horizontal direction, preferentially by snapping on.

9. Motor-vehicle bodywork (2) according to any of claims 1 to 8, **characterised in that** the fixing means comprise clips (28) inserted in orifices in the first partition (24), said clips comprising a self-adhesive surface (50) receiving the second partition (26).

10. Method for assembling motor-vehicle bodywork (2) with a rear entrance (4) intended to be closed by a rear hatch;
**characterised in that** the bodywork (2) is in accordance with any of clams 1 to 9, the assembly method comprising the following steps;
a) fixing the first partition (24) to the front element (12) so as to form a first assembly (54);
b) fixing the second partition (26) to the rear element (10) so as to form a second assembly (56);
c) assembling the first (54) and second (56) assemblies, in particular by the rapid fixing means (28).
